(19) Europäisches Patentamt
European Patent Office
Office européen des brevets

(11) **EP 4 451 610 B1**

(12) **EUROPEAN PATENT SPECIFICATION**

(45) Date of publication and mention
of the grant of the patent:
**06.08.2025 Bulletin 2025/32**

(21) Application number: **23213924.6**

(22) Date of filing: **04.12.2023**

(51) International Patent Classification (IPC):
**H04L 9/32** *(2006.01)*

(52) Cooperative Patent Classification (CPC):
**H04L 9/3268; H04L 9/3263;** H04L 2209/42;
H04L 2209/80; H04L 2209/84

(54) **METHOD, DEVICE FOR PROCESSING PSEUDONYM CERTIFICATE OF ON-BOARD APPARATUS, AND ON-BOARD APPARATUS**

VERFAHREN, VORRICHTUNG ZUR VERARBEITUNG EINES PSEUDONYMZERTIFIKATS EINER BORDVORRICHTUNG UND BORDVORRICHTUNG

PROCÉDÉ, DISPOSITIF DE TRAITEMENT DE CERTIFICAT DE PSEUDONYME D'UN APPAREIL EMBARQUÉ, ET APPAREIL EMBARQUÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.04.2023 CN 202310432362**

(43) Date of publication of application:
**23.10.2024 Bulletin 2024/43**

(73) Proprietor: **Nanjing SemiDrive Technology Ltd.
Technoloy Research & Innovation Park,
Jiangbei New Area, Nanjing (CN)**

(72) Inventor: **Zhu, Hua
Nanjing (CN)**

(74) Representative: **Ziebig Hengelhaupt Intellectual
Property Attorneys
Patentanwaltskanzlei PartGmbB
Leipziger Straße 49
10117 Berlin (DE)**

(56) References cited:
**US-A1- 2019 245 703**

• **MARCOS A. SIMPLICIO ET AL: "ACPC: Efficient revocation of pseudonym certificates using activation codes", AD HOC NETWORKS, vol. 90, 27 July 2018 (2018-07-27), AMSTERDAM, NL, pages 101708, XP055709270, ISSN: 1570-8705, DOI: 10.1016/j.adhoc.2018.07.007**

**Description**

FIELD OF THE INVENTION

The present application relates to computer technology, and in particular, to a method, a device for processing pseudonym certificate of an on-board apparatus, and the on-board apparatus.

DESCRIPTION OF RELATED ART

In vehicles to everything (V2X) communication, in order to ensure the credibility of the source and the content of V2X messages, a security credential management system (SCMS) is usually developed, standardized and implemented to issue certificates to vehicles and road side devices; wherein the certificate issued for the vehicle is a pseudonym certificate (PC). PC is characterized by short validity period and large quantity of simultaneous issuances. For example, 20 PCs can be issued for the same vehicle in one cycle, and each PC is valid for one week. Since V2X has requirements of low-latency and high-performance, how to acquire the PC of the on-board apparatus in the vehicle to satisfy requirements of V2X on low-latency and high-performance to the greatest extent is a goal that vehicles to everything technology has been pursuing. US20190245703A1 discloses a mechanism of blocking activation of the digital certificate by withholding an activation code from the certificate user, so as to revoke a digital certificate. The certificates are generated by a plurality of entities in a robust process that preserves user privacy even in case of collusion of some of the entities. MARCOS A. SIMPLICIO ET AL: "ACPC: Efficient revocation of pseudonym certificates using activation codes" discloses a design called Activation Codes for Pseudonym Certificates, which can be integrated into SCMS to address the issue that SCMS's original revocation mechanism can lead to large Certification Revocation Lists.

SUMMARY OF THE INVENTION

The embodiments of the present application provide a method, a device, for processing pseudonym certificate of an on-board apparatus, and the on-board apparatus, which can satisfy requirements of V2X on low-latency and high-performance to the greatest extent. The present invention is defined by the method of independent claim 1, the device of independent claim 10, the chip of independent claim 11, the component of independent claim 12, the on-board apparatus of independent claim 13 and the storage medium of independent claim 14. In the following, in case parts of the description and drawing referring to embodiments, which are not covered by the claims are not presented as embodiments of the invention, but as examples useful for understanding the invention.

The technical solutions of the embodiments of the present application are implemented as follows.

In a first aspect, an embodiment of the present application provides a method for processing pseudonym certificate of an on-board apparatus, and the method is applied to the on-board apparatus based on vehicles to everything. The method comprises the following steps: generating a secret key and storing the secret key into a security storage unit of the on-board apparatus, wherein the security storage unit is only used to store data corresponding to the pseudonym certificates; transmitting a pseudonym certificate request generated based on the secret key; acquiring a first pseudonym certificate corresponding to the pseudonym certificate request, and generating a pseudonym certificate private key based on the first pseudonym certificate and the secret key stored in the security storage unit.

In some embodiments, generating a pseudonym certificate private key based on the first pseudonym certificate and the secret key stored in the security storage unit comprises: determining a time period of the pseudonym certificates and the number of pseudonym certificates within the time period based on the first pseudonym certificate; determining a public key cocoon based on the time period and the number of pseudonymous certificates within the time period; determining an expansion private key based on the public key cocoon; processing the first pseudonym certificate based on the expansion private key to obtain a first pseudonym certificate private key.

In some embodiments, determining the public key cocoon based on the time period and the number of pseudonymous certificates within the time period comprises: determining a first expansion parameter based on the time period and the number of pseudonymous certificates within the time period; determining a second expansion parameter based on the first expansion parameter; determining an integer pseudorandom sequence in the public key cocoon based on the second expansion parameter.

In some embodiments, after determining the second expansion parameter based on the first expansion parameter, the method further comprises: storing the second expansion parameter into the security storage unit.

In some embodiments, determining an integer pseudorandom sequence in the public key cocoon based on the second expansion parameter comprises: acquiring the second expansion parameter from the security storage unit; invoking a public key operation algorithm engine in the on-board apparatus, and processing the second expansion parameter using the public key operation algorithm engine to obtain the integer pseudorandom sequence.

In some embodiments, determining a second expansion parameter based on the first expansion parameter comprises: based on a counter mode, encrypting, for a plurality of times in sequence, multiple pieces of data obtained once, using the secret key to obtain the second expansion parameter. Wherein, the multiple pieces of data comprises: a sum of the first expansion parameter and a first numerical value, a sum of the first expansion parameter and the two first numerical values, and a sum of the first expansion parameter and the three first numerical values.

In some embodiments, after determining the integer pseudorandom sequence in the public key cocoon based on the second expansion parameter, the method further comprises: acquiring a second pseudonym certificate.

In some embodiments, determining an expansion private key based on the public key cocoon comprises: acquiring the secret key from the security storage unit; invoking a public key operation algorithm engine in the on-board apparatus, and processing the secret key and the integer pseudorandom sequence in the public key cocoon using the public key operation algorithm engine to obtain the expansion private key.

In some embodiments, processing the secret key and the integer pseudorandom sequence in the public key cocoon using the public key operation algorithm engine to obtain the expansion private key comprises: performing a modulo operation on a sum of a first constant in the secret key and the integer pseudorandom sequence using the public key operation algorithm engine, to obtain the expansion signature private key in the expansion private key; performing a modulo operation on a sum of a second constant in the secret key and the integer pseudorandom sequence using the public key operation algorithm engine, to obtain an expansion encryption private key in the expansion private key.

In some embodiments, processing the first pseudonym certificate based on the expansion private key to obtain the first pseudonym certificate private key comprises: decrypting the first pseudonym certificate using the expansion encryption private key in the expansion private key to obtain a third constant; performing a modulo operation on the third constant; determining a sum of a value obtained by performing a modulo operation on the third constant and the expansion signature private key as the first pseudonym certificate private key.

In a second aspect, an embodiment of the present application provides a device for processing pseudonym certificate of an on-board apparatus, the device comprises: a generating module configured to generate a secret key and store the secret key to a security storage unit of the on-board apparatus, wherein the security storage unit is only used to store data corresponding to the pseudonym certificates; a transmitting module configured to transmit a pseudonym certificate request generated based on the secret key; a processing module configured to acquire a first pseudonym certificate corresponding to the pseudonym certificate request, and generate a pseudonym certificate private key based on the first pseudonym certificate and the secret key stored in the security storage unit.

In some embodiments, the processing module is configured to: determine a time period of the pseudonym certificates and the number of pseudonym certificates within the time period based on the first pseudonym certificate; determine a public key cocoon based on the time period and the number of pseudonymous certificates within the time period; determine an expansion private key based on the public key cocoon; process the first pseudonym certificate based on the expansion private key to obtain a first pseudonym certificate private key.

In some embodiments, the processing module is configured to: determine a first expansion parameter based on the time period and the number of pseudonymous certificates within the time period; determine a second expansion parameter based on the first expansion parameter; determine an integer pseudorandom sequence in the public key cocoon based on the second expansion parameter.

In some embodiments, the security storage unit is configured to store the second expansion parameter.

In some embodiments, the processing module is configured to acquire the second expansion parameter from the security storage unit, invoke a public key operation algorithm engine in the on-board apparatus, and process the second expansion parameter using the public key operation algorithm engine to obtain the integer pseudorandom sequence.

In some embodiments, the processing module is configured to encrypt, for a plurality of times in sequence, multiple pieces of data obtained once, based on a counter mode using the secret key, so as to obtain the second expansion parameter. Wherein, the multiple pieces of data comprises: a sum of the first expansion parameter and a first numerical value, a sum of the first expansion parameter and the two first numerical values, and a sum of the first expansion parameter and the three first numerical values.

In some embodiments, the processing module is also configured to acquire a second pseudonym certificate.

In some embodiments, the processing module is configured to: acquire the secret key from the security storage unit; invoke a public key operation algorithm engine in the on-board apparatus, and processing the secret key and the integer pseudorandom sequence in the public key cocoon using the public key operation algorithm engine to obtain the expansion private key.

In some embodiments, the processing module is configured to: perform a modulo operation on a sum of a first constant in the secret key and the integer pseudorandom sequence using the public key operation algorithm engine, to obtain an expansion signature private key in the expansion private key; perform a modulo operation on a sum of a second constant in the secret key and the integer pseudorandom sequence using the public key operation algorithm engine, to obtain an expansion encryption private key in the expansion private key.

In some embodiments, the processing module is configured to: decrypt the first pseudonym certificate using the expansion encryption private key in the expansion private key to obtain a third constant; perform a modulo operation on the third constant; determine a sum of a value obtained by performing a modulo operation on the third constant and the expansion signature private key as the first pseudonym certificate private key.

In a third aspect, an embodiment of the present application provides a chip including a processor, a memory, and a bus, wherein the memory stores executable instructions, and the processor communicate with the memory through the bus. And the processor, when executing the executable instructions stored in the memory, implements the method for processing pseudonym certificate of the on-board apparatus as described above.

In a fourth aspect, an embodiment of the present application provides a component on the on-board apparatus, wherein the component comprises the chip described above and implements the foregoing method for processing pseudonym certificate of the on-board apparatus.

In a fifth aspect, an embodiment of the present application provides an on-board apparatus, which comprises the chip described above and implements the foregoing method for processing pseudonym certificate of the on-board apparatus.

In a sixth aspect, an embodiment of the present application provides a computer-readable storage medium that stores executable instructions for implementing the foregoing method for processing pseudonym certificate of the on-board apparatus when executed by a processor.

The method for processing the pseudonym certificate of the on-board apparatus provided by the embodiments of this application is applied to on-board apparatus based on the vehicles to everything. The method comprises: generating a secret key and storing the secret key into a security storage unit of the on-board apparatus, wherein the security storage unit is only used to store data corresponding to the pseudonym certificates; transmitting a pseudonym certificate request generated based on the secret key; acquiring a first pseudonym certificate corresponding to the pseudonym certificate request, and generating a pseudonym certificate private key based on the first pseudonym certificate and the secret key stored in the security storage unit. In the embodiments of the present application, by storing the data corresponding to the pseudonym certificates through the security storage unit included in the on-board apparatus, the security of the data corresponding to the pseudonym certificates can be improved. In generating the pseudonym certificate private key by the on-board apparatus, the on-board apparatus can acquire directly and rapidly data corresponding to the pseudonym certificates from the security storage unit, which improves the processing efficiency of the pseudonym certificate of the on-board apparatus and satisfies requirements of V2X on low-latency and high-performance to the greatest extent.

## BRIEF DESCRIPTION OF THE DRAWINGS

Fig. 1 is a schematic diagram of an optional processing flow of a method for processing the pseudonym certificate of an on-board apparatus according to an embodiment of the present application;

Fig. 2 is a schematic diagram of a processing flow of generating a pseudonym certificate private key based on the first pseudonym certificate and the secret key stored in the security storage unit according to the embodiment of the present application;

Fig. 3 is a schematic diagram of a processing flow of determining a public key cocoon based on a time period and the number of pseudonymous certificates within the time period according to the embodiment of this application;

Fig. 4 is a schematic diagram of a processing flow of determining an expansion private key based on the public key cocoon according to the embodiment of the present application;

Fig. 5 is a schematic diagram of another optional processing flow of a method for processing the pseudonym certificate of an on-board apparatus according to an embodiment of the present application;

Fig. 6 is a schematic diagram of the on-board apparatus processing a pseudonym certificate in a two-stage pipeline according to the embodiment of the present application;

Fig. 7 is a schematic diagram of an application scenario in which the on-board apparatus processing a pseudonymous certificate according to the embodiment of the present application;

Fig. 8 is a schematic diagram of the composition structure of a device for processing pseudonym certificate of the on-board apparatus according to the embodiment of the present application;

Fig. 9 is a structural schematic diagram of the on-board apparatus according to the embodiment of the present application.

## DETAILED DESCRIPTION OF EMBODIMENTS

For the purpose of making the objects, technical solutions and advantages of the present application more apparent, the present application will be described in further detail with reference to the accompanying drawings, and the described embodiments should not be construed as limiting the present application, and all other embodiments obtained by a person skilled in the art without any inventive efforts fall within the scope of the present application.

In the following description, reference is made to "some embodiments" which describes a subset of all possible embodiments, but it is appreciated that "some embodiments" can be the same subset as or different subsets from all possible embodiments and can be combined with one another without conflict.

In the following description, the terms "first", "second" or the like are merely used to distinguish among similar objects and do not represent specific orders of the objects. It is appreciated that the "first", "second" or the like may be interchanged in terms of specific order or precedence thereof, as permitted, to enable embodiments of the present application described herein to be implemented in an order other than that illustrated or described herein.

Unless defined otherwise, all technical and scientific terms used herein have the same meaning as commonly understood by a person skilled in the art to which this application belongs. The terms used herein are merely for the purpose of describing embodiments of the present application and is not intended to limit the present application.

It should be understood that, in various embodiments of the present application, the serial number of each implementation does not indicate the execution order of each process, which should be determined by its function and internal logic and should not constitute any limitations on the implementation of the embodiments of the present application.

Before further describing embodiments of the present application in detail, the terms and terminologies that are referred to in the embodiments of the present application are described, and are suitable for the following explanations.

1) A heterogeneous multi-core system comprises at least two processor cores with different architectures, wherein hardware resources connected to the processor cores form a plurality of hardware domains which are isolated with one another in hardware. Heterogeneous multi-core refers to differences in hardware-level, rather than differences in operating system. There may be multiple hardware domains within one heterogeneous multi-core system-on-chip, one hardware domain being a set of resources. Due to the heterogeneous configuration between the processor cores, there is no cache coherence hardware between the processor cores. The hardware domain constituted by the interrupt controller, clock controller and memory of each processor core is hard isolated from each other. Therefore, each processor core cannot be directly scheduled by the operating system uniformly. The hardware resources within each processor core's hardware domain can only be accessed by the processor core corresponding to the hardware domain.

2) A pseudonym certificate authority (PCA) is used to issue short-term pseudonyms, identity labels, and application certificates for apparatuses. For example, a single PCA may be a specific manufacturer or a certain type of apparatuses limited in a specific geographic region.

3) An on-board apparatus (also referred as on-board unit, OBU) is an apparatus which is mounted on a vehicle and can communicate with a road side unit (RSU) using a dedicated short range communication (DSRC) technique; when a vehicle passes the RSU at a high speed, the OBU communicates with the RSU using microwaves to identify the corresponding vehicle type and calculate the toll rate, thereby allowing for deduction of the vehicle's toll.

4) A vehicles to everything (V2X) is a technology that enables vehicles to have internet connectivity, uploads vehicle operation information to a monitoring cloud platform, and provides vehicles with new dimension of perception through the interconnection among vehicles, road and humans; V2X may specifically include:

V2V-Vehicle to Vehicle, wherein vehicles communicate and interconnect with vehicles;
V2I-Vehicle to Infrastructure, wherein vehicles communicate and interconnect with road side devices (traffic lights, road side perception, or the like);
V2P-Vehicle to Pedestrian, wherein vehicles interconnect with pedestrians;
V2N-Vehicle to Network, wherein vehicles communicate and interconnect with the cloud platform.

In the V2X communication, certificates are issued to vehicles in order to ensure the credibility of the source and the content of V2X messages.

The creation of the conventional certificates may be implemented based on a conventional public key infrastructure (PKI) system in which the flow of creating a certificate comprises:

1) the on-board apparatus generating a public key and a private key, generating a certificate signing request (CSR) file based on the public key and the private key, and transmitting the CSR to a certificate authority (CA). Wherein, the CSR incorporates the public key therein.

2) The CA signing the CSR using its own private key and generating a certificate. The CA transmits the certificate to the on-board apparatus.

Therefore, in the V2X system, creating the certificate based on the certificate creation method in the PKI system has a low efficiency.

To address this problem, secret key derivation method can be adopted to generate a secret key only once for an individual vehicle. This secret key is then transmitted as a seed secret key to the SCMS. The SCMS continuously derives new public-private key pairs for the vehicle using the seed secret key, thereby continuously issuing new certificates. In this way, the amount of interaction between the on-board apparatus and the cloud platform can be reduced.

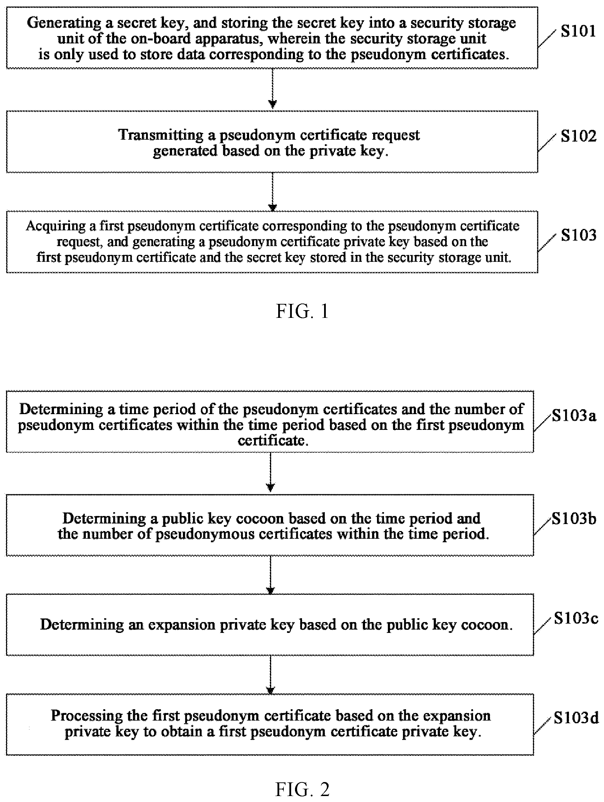

The embodiment of the present application provides an implementation of a method for processing pseudonym certificate of on-board apparatus at the on-board apparatus side, and an optional processing flow of the method for processing pseudonym certificate of the on-board apparatus, as shown in Fig. 1, comprises at least the following steps.

At step S101, a secret key is generated and stored into a security storage unit of the on-board apparatus, wherein the security storage unit is only used to store data corresponding to the pseudonym certificates.

In some embodiments, the secret key generated by the on-board apparatus may include a secret key generated based on an asymmetric public key algorithm and a secret key generated based on a symmetric algorithm.

In some embodiments, the on-board apparatus may generate a signature secret key and an encryption secret key based on the asymmetric public key algorithm, such as an SM2 algorithm, or elliptic curve digital signature algorithm (ECDSA). Taking the example that the on-board apparatus generates the signature secret key and the encryption secret key based on the SM2 algorithm, the secret key generated by the on-board apparatus may include a SM2 signature secret key and a SM2 encryption secret key. Wherein, the SM2 signature secret key is shown in the following formula (1), and the SM2 encryption secret key is shown in the following formula (2):

$$A = a \times G \qquad (1)$$

$$P = p \times G \qquad (2)$$

wherein $A$ represents a coordinate point, $P$ represents the public key, $a$ represents a certificate, p represents the private key, and $G$ represents a base point of a coordinate point elliptic curve.

In some embodiments, the on-board apparatus may generate an encryption symmetric secret key and a signature symmetric secret key based on a SM4 algorithm. The secret keys generated by the on-board apparatus may include a SM4 encryption symmetric secret key and a SM4 signature symmetric secret key. Wherein, $k_e$ represents the SM4 encryption symmetric secret key and $k_s$ represents the SM4 signature symmetric secret key.

In some embodiments, the on-board apparatus is provided with a security storage unit (also referred to as secure buffer unit) therein only for storing data corresponding to the pseudonymous certificates; wherein the data corresponding to the pseudonym certificates may include data generated during the generation of the pseudonym certificates, and data required for generating the pseudonym certificates. Accordingly, only the components or apparatuses for generating the pseudonym certificates have the privilege to access the security storage unit. In this way, the security of the data corresponding to the pseudonymous certificates can be improved by the security storage unit storing data corresponding to the pseudonymous certificates. In generating the pseudonym certificates, the on-board apparatus can acquire directly and rapidly data corresponding to the pseudonym certificates from the security storage unit, so that the processing efficiency of the pseudonym certificates of the on-board apparatus can be improved, and the requirements of V2X on low-latency and high-performance can be satisfied to the greatest extent.

At step S102, a pseudonym certificate request is transmitted and it is generated based on the private key.

In some embodiments, the on-board apparatus transmits a pseudonym certificate request to a pseudonym certificate registration authority (PRA) to request acquisition of a pseudonym certificate corresponding to the vehicle. As an example, the pseudonym certificate request comprises a SM2 signature secret key $A$, a SM2 encryption secret key P, a SM4 encryption symmetric secret key $k_e$, and a SM4 signature symmetric secret key $k_s$. Here, the SM2 signature secret key A may also be referred to as seed signature secret key, and the SM2 encryption secret key P may also be referred to as seed encryption secret key.

At step S103, a first pseudonym certificate corresponding to the pseudonym certificate request is acquired, and a pseudonym certificate private key is generated based on the first pseudonym certificate and the secret key stored in the security storage unit.

In some embodiments, the on-board apparatus receives the first pseudonym certificate transmitted by the PRA. The first pseudonym certificate can be generated by the PCA according to a pseudonym certificate request transmitted by the on-board apparatus, then the PCA transmits the first pseudonym certificate to the on-board apparatus via the PRA.

In some embodiments, the process flow of generating a pseudonym certificate private key based on the first pseudonym certificate and the secret key stored in the security storage unit may, as shown in Fig. 2, include at least the following steps.

At step S103a, a time period of the pseudonym certificates and the number of pseudonym certificates within the time period is determined based on the first pseudonym certificate.

In some embodiments, the first pseudonym certificate may be expressed as $SCT_{i,j}$, wherein $i$ represents the time period of the pseudonym certificate, and $j$ represents the number of pseudonym certificates within the time period.

At step S103b, a public key cocoon is determined based on the time period and the number of pseudonymous certificates within the time period.

In some embodiments, the public key cocoon comprises an expansion signature public key and an expansion encryption public key.

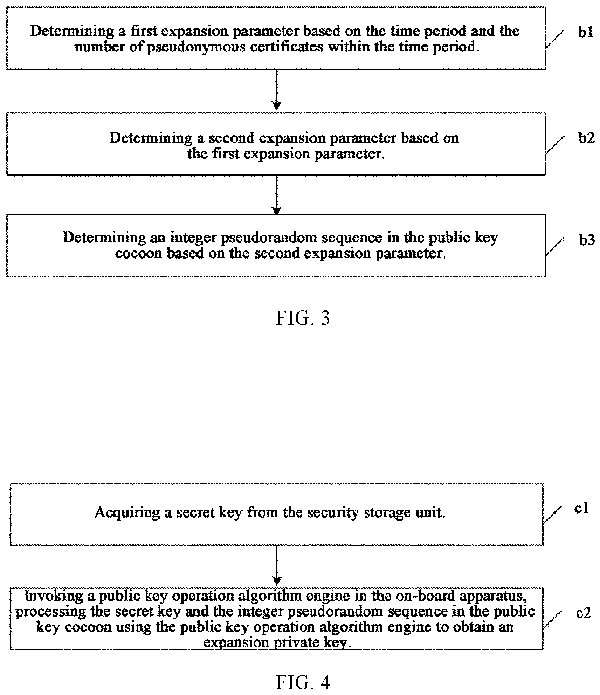

In some embodiments, the process flow of determining a public key cocoon based on the time period and the number of pseudonymous certificates within the time period may, as shown in Fig. 3, include at least the following steps.

At step b1, a first expansion parameter is determined based on the time period and the number of pseudonymous certificates within the time period.

In some embodiments, the first expansion parameter is used to obtain a signature public key cocoon. The first expansion parameter comprises $X_S$ and $X_E$, wherein $X_S$ is shown in the following formula (3), and $X_E$ is shown in the following formula (4).

$$X_S = (0^{32}\|i\|j\|0^{32}) \quad (3)$$

$$X_E = (1^{32}\|i\|j\|0^{32}) \quad (4)$$

wherein $i$ and $j$ in $X_S$ and $X_E$ are in the form of a bit string of 32 bits.

At step b2, a second expansion parameter is determined based on the first expansion parameter.

In some embodiments, the second expansion parameter is used to obtain a signature public key cocoon. The second expansion parameter comprises $Y_S$ and $Y_E$, wherein $Y_S$ is shown in the following formula (5) and $Y_E$ is shown in the following formula (6).

$$Y_S = (Symn(k_s, X_S + 1) \oplus (X_S + 1) \| (Symn(k_s, X_S + 2) \oplus (X_S + 2) \| (Symn(k_s, X_S + 3) \oplus (X_S + 3)) \quad (5)$$

$$Y_E = (Symn(k_e, X_E + 1) \oplus (X_E + 1) \| (Symn(k_e, X_E + 2) \oplus (X_E + 2) \| (Symn(k_e, X_E + 3) \oplus (X_E + 3)) \quad (6)$$

wherein $Symn(K, x)$ represents performing symmetric encryption for plaintext x using $K$, the value of $X_S$ and $X_E$ can be determined by the above formula (3) and formula (4) respectively, and $k_e$ is the SM4 encryption symmetric secret key generated by the on-board apparatus in step S101, $k_s$ is the SM4 signature symmetric secret key generated by on-board apparatus in step S101. In determining the second expansion parameter, the terminal device can read the values of $k_e$ and $k_s$ from its security storage unit.

In the embodiment of the present application, multiple pieces of data acquired once (at a time) are encrypted for a plurality of times in sequence, based on a counter (CTR) mode, using the secret key, so as to obtain the second expansion parameter. Wherein, the multiple pieces of data include a sum of a first expansion parameter and the first numerical value, a sum of the first expansion parameter and the two first numerical values, and a sum of the first expansion parameter and the three first numerical values. As an example, the first numerical value can be 1; accordingly, if the first expansion parameter is $X_S$, the multiple pieces of data that are encrypted can be $(X_S + 1)$, $(X_S + 2)$ and $(X_S + 3)$. Therefore, when calculating the second expansion parameter, the pieces of data encrypted for a plurality of times are input simultaneously, such that the pieces of data can be sequentially processed depending on the inputting order of the vector, and the second expansion parameter can be output directly. As an example, if the simultaneously input vector is: $X_S + 1\|X_S + 2\|X_S + 3$, $(X_S + 1)$, $(X_S + 2)$ and $(X_S + 3)$ are processed in sequence based on the counter mode to obtain the second expansion parameter $Y_S$.

In conventional prior arts, the process of determining $Y_S$ comprises the following steps: firstly, inputting a plaintext $(X_S + 1)$, performing ECB mode encryption operation on the plaintext, and perform exclusive or (XOR) operation on the encryption result and $(X_S + 1)$ to obtain a first encryption result; secondly, inputting a plaintext $(X_S + 2)$, performing ECB mode encryption operation on the plaintext $(X_S + 2)$, and performing XOR operation on the encryption result and $(X_S + 2)$ to obtain a second encryption result; lastly, inputting a plaintext $(X_S + 3)$, performing an ECB mode encryption operation on the plaintext $(X_S + 3)$, and performing XOR operation on the encryption result and $(X_S + 3)$ to obtain a third encryption result. $Y_S$ can then be obtained by splicing the first encryption result, the second encryption result and the third encryption result.

When determining $Y_S$ and $Y_E$ in the embodiment of the present application, when encrypting the plaintexts $(X_S + 1)$, $(X_S + 2)$ and $(X_S + 3)$ based on CTR mode, the three plaintexts $(X_S + 1)$, $(X_S + 2)$ and $(X_S + 3)$ are solely required to be input once, instead of inputting the plaintexts for a plurality of times or inputting the plaintext encrypted next after monitoring the encryption result of the previous plaintext, thereby improving encryption efficiency and performance of the V2X system.

In the embodiments of the present application, $X_S$ + n represents converting the octet string $X_S$ into an integer, adding n to the converted integer to obtain a new integer, and finally converting the new integer into an octet string. $X_E$ + n represents converting the octet string $X_E$ into an integer, adding n to the converted integer to obtain a new integer, and finally converting the new integer into an octet string. Wherein, n=1, 2, 3. As an example, if

$$X_S = (0^{32} \| i \| j \| 0^{32}) =$$

$$(0000\ 0000\ 0000\ 0000\ 0000\ 0000\ 0000\ 0000b \| i \| j \| 0000\ 0000\ 0000\ 0000\ 0000\ 0000\ 0000\ 0000),$$

$$X_S + 2 = (0000\ 0000\ 0000\ 0000\ 0000\ 0000\ 0000\ 0000b \| i \| j \| 0000\ 0000\ 0000\ 0000\ 0000\ 0000\ 0000\ 0010).$$

In the embodiment of the present application, the second expansion parameter may be stored in the security storage unit of the on-board apparatus.

At step b3, an integer pseudorandom sequence in the public key cocoon is determined based on the second expansion parameter.

In some embodiments, the integer pseudorandom sequence in public key cocoon may be expressed as $f_k(l)$, which is a integer pseudorandom sequence performing modulo operation on 1, wherein $l$ is an iterator.

In some embodiments, the specific process of determining the integer pseudorandom sequence in the public key cocoon based on the second expansion parameter may include: acquiring the second expansion parameter from the security storage unit, invoking a public key operation algorithm engine (PKE) in the on-board apparatus, and processing the second expansion parameter using the public key operation algorithm engine to obtain the integer pseudorandom sequence. Wherein, processing the second expansion parameter may include performing a modulo 1 operation on the second expansion parameter. $f_k(l) = f_k^{int}(l) \bmod 1$, wherein when the value of $f_k^{int}(l)$ is $Y_S$, the obtained integer pseudorandom sequence $f_k(l)$ is the expansion signature public key; accordingly, the signature public key cocoon formed by the expansion signature public key can be expressed as $f_s(k_s, i^{int}, j^{int}) = Y_s^{int} \bmod 1$; when the value of $f_k^{int}(l)$ is $Y_E$, the obtained integer pseudorandom sequence $f_k(l)$ is the expansion encryption public key; accordingly, the encryption public key cocoon formed by the expansion encryption public key can be expressed as $f_E(k_E, i^{int}, j^{int}) = Y_E^{int} \bmod 1$. The encryption public key cocoon and the signature public key cocoon constitute the public key cocoon.

In the embodiment of the present application, the public key cocoon is determined directly by the on-board apparatus, which, compared with the conventional prior art in which the public key cocoon is determined by the PRA and then sends the determined public key cocoon to the on-board apparatus, can reduce data transmission between the on-board apparatus and the PRA, save network resources and improve the performance of the V2X system.

At step S103c, an expansion private key is determined based on the public key cocoon.

In some embodiments, as shown in Fig. 4, the process flow of determining the expansion private key based on the public key cocoon may include at least the following steps. At step c1, a secret key is acquired from the security storage unit.

In some embodiments, the secret key may include a first constant $a$ and a second constant p.

At step c2, a public key operation algorithm engine in the on-board apparatus is invoked, the secret key and the integer pseudorandom sequence in the public key cocoon is processed using the public key operation algorithm engine to obtain an expansion private key.

In some embodiments, a modulo 1 operation is performed on a sum of a first constant $a$ in the secret key and the integer pseudorandom sequence in the public key cocoon using the public key operation algorithm engine (Public Key Engine, PKE) to obtain an expansion signature private key in the expansion private key. If the expansion signature private key is expressed as $b_{i,j}$, it can be expressed as the following formula (7):

$$b_{i,j} = \left(a + f_s\left(k_s, i^{int}, j^{int}\right)\right) \bmod 1 \quad (7)$$

In some embodiments, a modulo 1 operation is performed on a sum of the second constant p in the secret key and the integer pseudorandom sequence in the public key cocoon using the PKE to obtain an expansion encryption private key in the expansion private key. If the expansion encryption private key is expressed as $q_{i,j}$, it can be expressed as the following formula (8):

$$q_{i,j} = \left( p + f_E\left( k_E, i^{int}, j^{int} \right) \right) mod\, 1 \qquad (8)$$

At step S103d, the first pseudonym certificate is processed based on the expansion private key to obtain a first pseudonym certificate private key.

In some embodiments, the specific implementation of processing the first pseudonym certificate based on the expansion private key to obtain a first pseudonym certificate private key may include: decrypting the first pseudonym certificate using an expansion encryption private key in the expansion private key to obtain a third constant; performing a modulo operation on the third constant; and determining a sum of the value obtained by performing the modulo operation on the third constant and the expansion signature private key as the first pseudonym certificate private key.

In specific implementation, an expansion encryption private key $q_{i,j}$ can be utilized to decrypt the first pseudonym certificate $SCT_{i,j}$ to obtain a third constant c, wherein the specific implementation of decrypting the first pseudonym certificate is the same as that of the conventional prior art, and will not be repeated herein. The modulo operation on the third constant may be a modulo 1 operation on the third constant, which can be expressed as: *c mod* 1. If the first pseudonymous certificate private key is expressed as $S_{i,j}$, it can be expressed in the following formula (9):

$$S_{i,j} = b_{i,j} + c\, mod\, 1 \qquad (9)$$

In some embodiments, it is possible to store $S_{i,j}$ in a certificate storage unit of the on-board apparatus, wherein the certificate storage unit is only used for storing the pseudonymous certificates. After the third constant is obtained, it may be stored in a security storage unit of the on-board apparatus. When determining the first pseudonym certificate private key, the third constant may be read from the security storage unit firstly, and then the first pseudonym certificate private key may be determined with the third constant.

In this embodiment of the present application, before decrypting the first pseudonym certificate, it is necessary to verify the first pseudonym certificate using PKE, and once the verification is successful, step S103d can be executed. In the embodiment of the present application, the PKE may include two independent operation units, one of which is used for encrypting, decrypting and verifying operations while the other of which is used for performing modulo arithmetic.

In the embodiment of the present application, the first pseudonym certificate private key is determined directly by the on-board apparatus, which, compared with the conventional prior art in which the first pseudonym certificate private key is generated by the PCA before being transmitted to the on-board apparatus via the PRA, can reduce the data transmission between the on-board apparatus and the PRA, reduce the data transmission between the PRA and the PCA, save network resources, and improve the performance of the V2X system.

In the embodiment of the present application, only the hardware in the terminal apparatus used for encrypting or decrypting data and the PKE have access to the security storage unit, capable of writing data to or read data from the security storage unit. Other apparatuses than the terminal apparatus, as well as any hardware in the terminal apparatus other than ones used for encrypting or decrypting data and the PKE, are not capable of reading from or writing data to the security storage unit, which ensures the security of the data in the security storage unit.

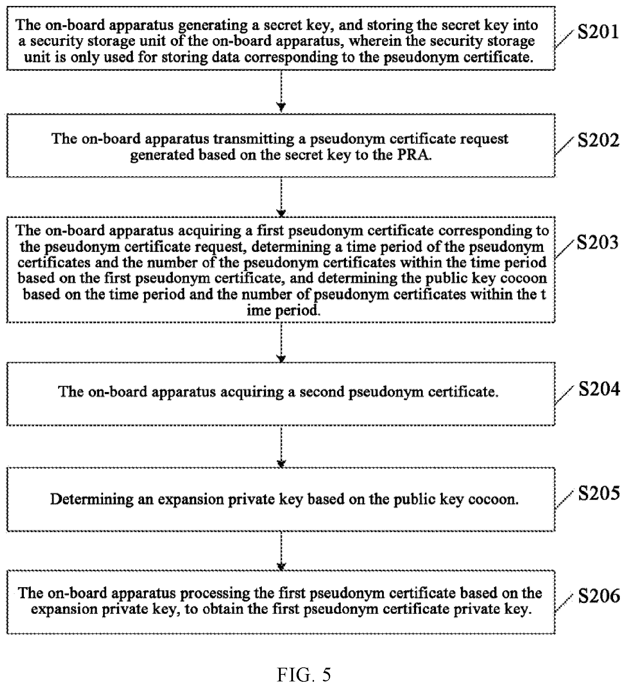

The embodiment of the present application provides an implementation of an alternative method for processing a pseudonym certificate of an on-board apparatus at the on-board apparatus side. As shown in Fig. 5, the alternative processing flow of the method for processing the pseudonym certificate of the on-board apparatus comprises at least the following steps:

Step S201, the on-board apparatus generating a secret key, and storing the secret key into a security storage unit of the on-board apparatus, wherein the security storage unit is only used for storing data corresponding to the pseudonym certificate.

Step S202, the on-board apparatus transmitting a pseudonym certificate request generated based on the secret key to the PRA.

In some embodiments, the processes from steps S201 to S202 are the same as those from steps S101 to S102, and will not be repeated herein.

At step S203, the on-board apparatus acquires a first pseudonym certificate corresponding to the pseudonym certificate request, determines a time period of the pseudonym certificates and the number of the pseudonym certificates within the time period based on the first pseudonym certificate, and determines the public key cocoon based on the time period and the number of pseudonym certificates within the time period.

In some embodiments, the process of step S203 is the same as that from steps S103a to S103b, and will not be repeated herein.

At step S204, the on-board apparatus acquires a second pseudonym certificate.

In the embodiment of the present application, after acquiring the public key cocoon corresponding to the first pseudonym certificate, the on-board apparatus may continue to acquire the second pseudonym certificate by adopting the same operations as those from steps S201 to S202; and may acquire the public key cocoon corresponding to the second pseudonym certificate by adopting the same operation as that in step S203.

At step S205, the on-board apparatus determines an expansion private key based on the public key cocoon.

At step S206, the on-board apparatus processes the first pseudonym certificate based on the expansion private key, to obtain the first pseudonym certificate private key.

In the embodiment of the present application, the processes from steps S205 to S206 are the same as those from steps S103c to S103d, and will not be repeated herein.

In the embodiment of the present application, steps S205 to S206 may be performed simultaneously with step S204, and a plurality of pseudonym certificates are processed simultaneously in a pipelining manner, so that the efficiency of processing the pseudonym certificates by the on-board apparatus can be improved.

In the embodiment of the present application, after the second pseudonym certificate is acquired in step S204, a second pseudonym certificate private key may also be acquired by the same operations as those from steps S205 to S206. In this situation, steps S204 to S206 may be performed simultaneously with steps S205 to S206.

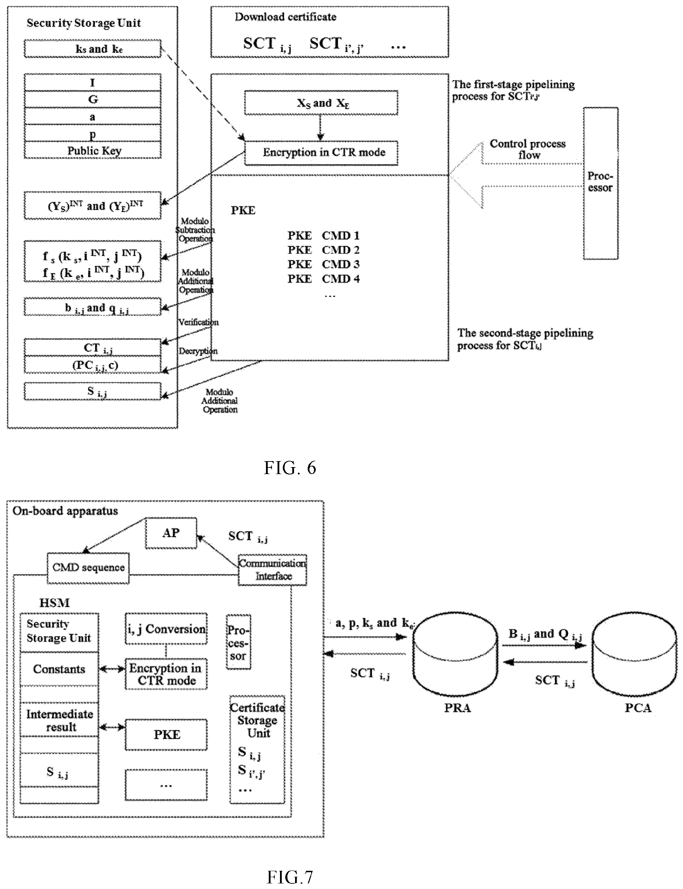

In the embodiment of the present application, the processes from steps S201 to S203 may be referred to as a first-stage pipelining for acquiring a pseudonym certificate; the processes from steps S205 to S206 may be referred to as a second-stage pipelining for acquiring a pseudonym certificate. The on-board apparatus processes the pseudonym certificate in a two-stage pipelining manner as shown in Fig. 6: the first-stage pipelining process can be performed on the second pseudonymous certificate $SCT_{i',j'}$ meanwhile the second-stage pipelining process is performed on the first pseudonym certificate $SCT_{i,j}$. Operations performed in the first-stage pipelining may include: downloading a pseudonym certificate, determining a first expansion parameters $X_S$ and $X_E$, and determining a second expansion parameters $Y_S$ and $Y_E$. Values generated in the first-stage pipelining process, such as G, $a$, $p$, $k_e$, $k_s$ and public key (pub key), may be stored in the security storage unit. Operations performed in the second-stage pipelining may include: the PKE obtaining a signature public key cocoon $f_s(k_s, i^{int}, j^{int})$ and an encryption public key cocoon $f_E(k_E, i^{int} j^{int})$ by means of modulo subtraction operation, the PKE determining the expansion signature private key $b_{i,j}$ and the expansion encryption private key $q_{i,j}$ by means of modulo additional operation, verifying and decrypting $SCT_{i,j}$ to obtain $PC_{i,j}$ and the third constant $c$, and determining the pseudonymous certificate private key $S_{i,j}$ by means of modulo additional operation. In the second-stage pipelining process, the PKE may sequentially execute multiple commands according to a command first input first output (CMD FIFO) principle, and the multiple commands may be PKE CMD1, PKE CMD2, PKE CMD3, or the like.

In the above embodiment of the present application, the simultaneous processing of only two pseudonymous certificates is used as an example for the purposes of illustration. In specific implementation, multiple pseudonym certificates may be processed simultaneously. For example, regarding the second pseudonym certificate, after the public key cocoon corresponding to the second pseudonym certificate is acquired, a third pseudonym certificate may be continuously acquired. The operation of acquiring the third pseudonym certificate may be performed simultaneously with that of determining the second pseudonym certificate private key. And so on, the on-board apparatus can process a plurality of pseudonym certificates simultaneously. In the specific implementation, if there are vacant slots in the command first input first output (CMD FIFO) queue in the PKE, new pseudonymous certificate calculation commands can be written into the PKE. The PKE, based on the new pseudonymous certificate calculation commands, can process the new pseudonymous certificates in a pipelining manner, thereby accelerating the computation speed of the PKE and improving the efficiency of processing pseudonymous certificates by the terminal device.

In the embodiment of the present application, if a plurality of pseudonymous certificates are processed in a pipelining manner, one security storage unit may be provided respectively for each pseudonymous certificate, and data corresponding to only one pseudonymous certificate may be stored in one security storage unit.

In the embodiment of the present application, the system corresponding to the on-board apparatus is a system with a heterogeneous multi-core structure, and accordingly, the chip in the on-board apparatus is a heterogeneous multi-core system (may also be referred to as a heterogeneous multi-core SoC) chip, and the SoC can function to process a pseudonym certificate. The function of processing the pseudonym certificate may be implemented by a hardware security module (HSM) comprising a processor in the on-board apparatus. The operating system and the application program of the heterogeneous multi-core SoC are both running on the application processor. If the application requires security services, the application domain (AP) processor transmits a command to the HSM, which performs the corresponding operation in response to the command transmitted by the AP processor.

In the embodiment of the present application, Fig. 7 shows the schematic diagram of an application scenario in which the on-board apparatus processes a pseudonym certificate. The SoC invokes an encryption algorithm engine in the HSM to generate $A$, $P$, $k_e$ and $k_s$. The AP transmits a request to the PCA via the PRA to request a plurality of pseudonym certificates which adopt a butterfly key expansion algorithm. The request transmitted from the AP to the PRA carries $A$, $P$, $k_e$ and $k_s$ therein, and the request transmitted from the PRA to the PCA carries $B_{i,j}$ and $Q_{i,j}$ therein, wherein $B_{i,j}$ is determined based on $A$, $P$, $k_e$ and $k_s$ while $Q_{i,j}$ is determined based on $A$, $P$, $k_e$ and $k_s$. The PCA provides a pseudonymous certificate

$SCT_{i,j}$ to the AP via the PRA, the AP downloads $SCT_{i,j}$ and transmits a butterfly key algorithm command (CMD Queue) to the HSM. The HSM adopts the method for processing pseudonym certificate of the on-board apparatus provided by the above embodiment of the present application, and stores constants, such as A and P, generated by the encryption operation engine into the security storage unit. The public key operation algorithm engine determines an intermediate result related to the pseudonymous certificate, such as the public key cocoon, and stores the intermediate result into the security storage unit. The HSM generates a pseudonym certificate private key using the constants and intermediate result stored in the security storage unit, and stores the pseudonym certificate private key into the certificate storage unit.

The number of periods required for decrypting a pseudonym certificate using the method for processing pseudonym certificate of the on-board apparatus provided by the embodiment of the present application is compared with the number of periods required for decrypting a pseudonym certificate in a conventional manner, as shown in the following Table 1, which shows the number of periods required for each process of decrypting the pseudonym certificate. It can be seen that the number of periods required for decrypting a pseudonym certificate using the method for processing the pseudonym certificate of the on-board apparatus provided by the embodiment of the present application is about one third of the number of periods required for decrypting a pseudonym certificate in a conventional manner. Therefore, the efficiency of decrypting a pseudonymous certificate by adopting the method for processing pseudonym certificate of the on-board apparatus provided by the embodiment of the present application is far higher than the efficiency of decrypting a pseudonymous certificate in a conventional manner. Table 1 is a comparison of the numbers of periods required for decrypting a pseudonym certificate, and an embodiment of the present application may also decrypt multiple pseudonym certificates simultaneously in a pipelining manner, which may further increase the efficiency of decrypting pseudonym certificates.

Table 1. Comparison of the numbers of periods required for decrypting a pseudonymous certificate

| Number of periods | Conventional manner | The present application |
|---|---|---|
| Calculation of the first expansion parameter | 100 | 20 |
| Calculation of the second expansion parameter | 2000 | 200 |
| Calculation of $f_E$ and $f_S$ | 64 | 32 |
| Calculation of $q_{i,j}$ and $b_{i,j}$ | 64 | 32 |
| Calculation of $PC_{i,j}$ and c | 2100 | 1200 |
| Calculation of $S_{i,j}$ | 32 | 16 |
| Total | 4360 | 1500 |

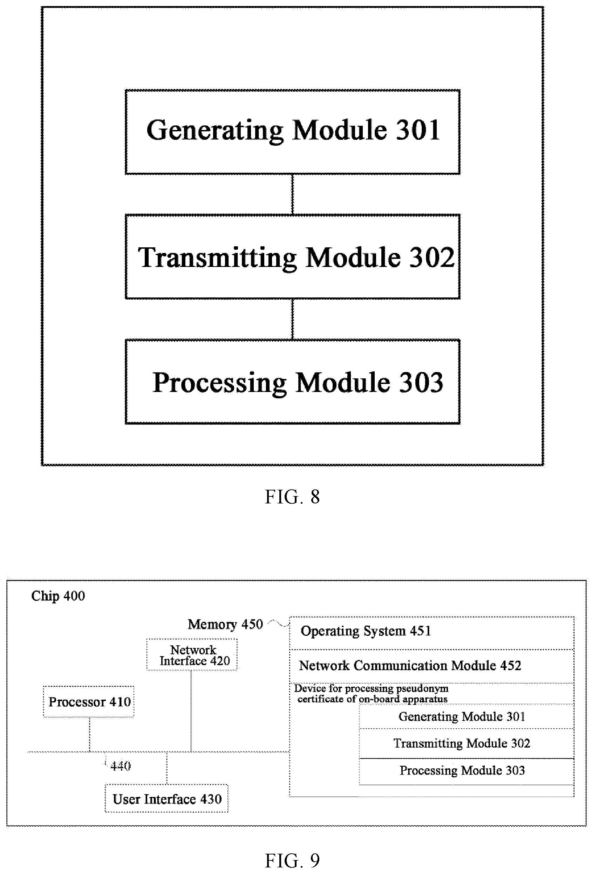

The embodiment of the present application further provides a device for processing pseudonymous certificate of an on-board apparatus. Fig. 8 shows the structural schematic diagram of the device for processing pseudonymous certificate of the on-board apparatus, the device comprises a generating module 301, a transmitting module 302, and a processing module 303. The generating module 301 is configured to generate a secret key, and store the secret key into a security storage unit of the on-board apparatus, wherein the security storage unit is only used for storing data corresponding to a pseudonymous certificate. The transmitting module 302 is configured to transmit a pseudonym certificate request, which is generated based on the secret key. The processing module 303 is configured to acquire a first pseudonym certificate corresponding to the pseudonym certificate request, and generate a pseudonym certificate private key based on the first pseudonym certificate and the secret key stored in the security storage unit.

In some embodiments, the processing module 303 is configured to: determine a time period of the pseudonym certificates and the number of pseudonym certificates within the time period based on the first pseudonym certificate; determine a public key cocoon based on the time period and the number of pseudonym certificates within the time period; determine an expansion private key based on the public key cocoon; and process the first pseudonym certificate based on the expansion private key to obtain a first pseudonym certificate private key.

In some embodiments, the processing module 303 is configured to: determine a first expansion parameter based on the time period and the number of pseudonym certificates within the time period; determine a second expansion parameter based on the first expansion parameter; and determine an integer pseudorandom sequence in the public key cocoon based on the second expansion parameter.

In some embodiments, the security storage unit is configured to store the second expansion parameter.

In some embodiments, the processing module 303 is configured to: acquire the second expansion parameter from the security storage unit; and invoke a public key operation algorithm engine in the on-board apparatus, and process the second expansion parameter using the public key operation algorithm engine to obtain the integer pseudorandom sequence.

In some embodiments, the processing module 303 is configured to encrypt, for a plurality of times in sequence, the multiple pieces of data acquired at a time (once) using the secret key based on a counter mode, so as to obtain the second expansion parameter. Wherein the multiple pieces of data comprises a sum of the first expansion parameter and a first numerical value, a sum of the first expansion parameter and the two first numerical values, and a sum of the first expansion parameter and the three first numerical values.

In some embodiments, the processing module 303 is further configured to acquire a second pseudonym certificate.

In some embodiments, the processing module 303 is configured to: acquire the secret key from the security storage unit; and invoke the public key operation algorithm engine in the on-board apparatus, and process the secret key and the integer pseudorandom sequence in the public key cocoon using the public key operation algorithm engine to obtain the expansion private key.

In some embodiments, the processing module 303 is configured to: perform a modulo operation on a sum of a first constant in the secret key and the integer pseudorandom sequence using the public key operation algorithm engine, so as to obtain an expansion signature private key in the expansion private key; and perform a modulo operation on a sum of a second constant in the secret key and the integer pseudorandom sequence using the public key operation algorithm engine, so as to obtain an expansion encryption private key in the expansion private key.

In some embodiments, the processing module 303 is configured to: decrypt the first pseudonym certificate using the expansion encryption private key in the expansion private key to obtain a third constant; perform a modulo operation on the third constant; and determine a sum of the value obtained by performing the modulo operation on the third constant and the expansion signature private key as the first pseudonym certificate private key.

An embodiment of the present application further provides a chip including a processor, a memory, and a bus. The memory stores executable instructions. The processor communicate with the memory through the bus, and when executing the executable instructions stored in the memory, the processor implements the method for processing pseudonym certificate of the on-board apparatus provided by embodiments of the present application.

Fig. 9 shows the schematic diagram of the hardware composition structure of the chip provided in embodiments of the present application. The chip 400 comprises at least one processor 410, a memory 450, and a bus 440. The various components in chip 400 are coupled together by the bus 440. It is appreciated that the bus 440 is configured to enable connection communication between these components. **In** addition to the data bus, the bus 440 further comprises a power bus, a control bus, and a status signal bus. However, for the purpose of clear illustration, the various buses are labeled as bus 440 in Fig. 9.

The processor 410 can be built in a system-on-chip or an application specific integrated circuit (ASIC). The processor 410 can also be located on a separate semiconductor chip and have capability of signal processing, such as a general-purpose processor, digital signal processor (DSP), microprocessor, microcontroller unit (MCU), or other programmable logic devices, discrete gates or transistor logic devices, and discrete hardware components, wherein the general-purpose processor can be a microprocessor or any conventional processor, etc.

The memory 450 stores executable instructions for implementing the method for processing pseudonymous certificate of the on-board apparatus provided in the embodiment of the present application. The processing of the pseudonymous certificate of the on-board apparatus may be implemented by the generating module 301, the transmitting module 302 and the processing module 303 shown in Fig. 8. The memory 450 may be removable, non-removable, or a combination thereof. Exemplary hardware devices include solid state memory, hard drives, optical drives, or the like. The memory 450 alternatively comprises one or more storage devices physically remote from the processor 410.

In some embodiments, the memory 450 is capable of storing data to support various operations, examples of which include programs, modules, and data structures, or subsets or supersets thereof.

In some embodiments, the chip 400 may further include an operating system 451 and a network communication module 452. The operating system 451 comprises system programs, e.g., framework layer, core library layer, driver layer, etc., for processing various basic system services and performing hardware-related tasks, so as to implement various basic services and process hardware-based tasks. The network communication module 452 is used for reaching other computing devices via one or more (wired or wireless) network interfaces 420, examples of which include: Bluetooth, wireless compatibility authentication (Wi Fi), and universal serial bus (USB), etc.

An embodiment of the present application further provides a component on the on-board apparatus, wherein the component comprises the chip provided by the embodiment of the present application and implements the method for processing the pseudonym certificate of the on-board apparatus provided by the embodiment of the present application.

In some alternative embodiments, the component may be a component on a transportation facility, such as chassis, door, mainboard, dashboard, etc.; the transportation facility may be an intelligent transportation facility, such as an intelligent vehicle or the like.

An embodiment of the present application further provides an on-board apparatus, which comprises a chip capable of executing the above method for processing the pseudonym certificate of the on-board apparatus.

An embodiment of the present application provides a computer-readable storage medium storing executable instructions. When executing the executable instructions, the processor will be caused to execute the method for processing the pseudonym certificate of the on-board apparatus provided by embodiments of the present application, for example, the method for processing pseudonym certificate of the on-board apparatus as illustrated in Figs. 1 to 7.

In some embodiments, the computer readable storage medium may be a programmable read-only memory (PROM), erasable programmable read-only memory (EPROM), electrically erasable programmable read-only memory (EEPROM), ferromagnetic random access memory (FRAM), flash memory, magnetic surface memory, optical disk, or compact disc read-only memory (CD-ROM); the magnetic surface memory may be a disk memory or a tape memory. The volatile memory may be random access memory (RAM), which acts as external cache memory. By way of example, and not limitation, multiple forms of RAMs are available, such as static random access memory (SRAM), synchronous static random access memory (SSRAM), dynamic random access memory (DRAM), synchronous dynamic random access memory (SDRAM), double data rate synchronous dynamic random access memory (DDRSDRAM), enhanced synchronous dynamic random access memory (ESDRAM), syncLink dynamic random access memory (SLDRAM), direct rambus random access memory (DRRAM). The computer readable storage medium may also be various apparatuses including one or any combination of the memories described above.

In some embodiments, the executable instructions may be in the form of programs, soft, software modules, scripts, or code, written in any form of programming language (including compiled or interpreted languages, or declarative or procedural languages), and they may be deployed in any form, including as stand-alone programs or as modules, components, subroutines, or other units suitable for use in a computing environment.

As an example, the executable instructions may be deployed to be executed on one computing apparatus or multiple computing apparatuses located at one site, or alternatively, multiple computing apparatuses distributed across multiple sites and interconnected by a communication network.

Embodiments of the present application provide a computer program product comprising computer program/instruction which, when executed by a processor, implements a method for processing a pseudonym certificate of an on-board apparatus described herein.

The foregoing content is merely embodiments of the present application and is not intended to limit the protection scope as defined by the claims.

## Claims

1. A method for processing pseudonym certificate of an on-board apparatus, wherein the method is applied to the on-board apparatus based on vehicles to everything, the method including:

   generating (S101) a secret key and storing the secret key into a security storage unit of the on-board apparatus, wherein the security storage unit is only used to store data corresponding to pseudonym certificates;
   transmitting (S102) a pseudonym certificate request, which is generated based on the secret key;
   acquiring a first pseudonym certificate corresponding to the pseudonym certificate request, and generating a pseudonym certificate private key based on the first pseudonym certificate and the secret key stored in the security storage unit (S103);
   wherein generating (S103) a pseudonym certificate private key based on the first pseudonym certificate and the secret key stored in the security storage unit comprises:

   determining (S103a) a time period of the pseudonym certificates and the number of pseudonym certificates within the time period based on the first pseudonym certificate;
   determining (S103b) a public key cocoon based on the time period and the number of pseudonymous certificates within the time period;
   determining (S103c) an expansion private key based on the public key cocoon;
   processing (S103d) the first pseudonym certificate based on the expansion private key to obtain a first pseudonym certificate private key, **characterized in that** the public key cocoon is determined directly by the on-board apparatus.

2. The method of claim 1, wherein determining (S103b) a public key cocoon based on the time period and the number of pseudonymous certificates within the time period comprises:

   determining (b1) a first expansion parameter based on the time period and the number of pseudonymous certificates within the time period;
   determining (b2) a second expansion parameter based on the first expansion parameter;
   determining (b3) an integer pseudorandom sequence in the public key cocoon based on the second expansion parameter.

3. A method of claim 2, wherein after determining (b2) the second expansion parameter based on the first expansion parameter, the method further comprises:
storing the second expansion parameter into the security storage unit.

4. The method of claim 3, wherein determining (b3) an integer pseudorandom sequence in the public key cocoon based on the second expansion parameter comprises:

acquiring the second expansion parameter from the security storage unit;
invoking a public key operation algorithm engine in the on-board apparatus, and processing the second expansion parameter using the public key operation algorithm engine to obtain the integer pseudorandom sequence.

5. The method of claim 2, wherein determining (b2) a second expansion parameter based on the first expansion parameter comprises:

based on a counter mode, encrypting, for a plurality of times in sequence, multiple pieces of data obtained once using the secret key to obtain the second expansion parameter;
wherein the multiple pieces of data comprises: a sum of the first expansion parameter and a first numerical value, a sum of the first expansion parameter and two first numerical values, and a sum of the first expansion parameter and three first numerical values.

6. The method of any one of claims 2 to 5, wherein after determining (b3) the integer pseudorandom sequence in the public key cocoon based on the second expansion parameter, the method further comprises:
acquiring a second pseudonym certificate.

7. The method of claim 1, wherein determining (S103c) an expansion private key based on the public key cocoon comprises:

acquiring the secret key from the security storage unit (c1);
invoking a public key operation algorithm engine in the on-board apparatus, and processing the secret key and an integer pseudorandom sequence in the public key cocoon using the public key operation algorithm engine to obtain the expansion private key (c2).

8. The method of claim 7, wherein processing the secret key and an integer pseudorandom sequence in the public key cocoon using the public key operation algorithm engine to obtain the expansion private key comprises:

performing a modulo operation on a sum of a first constant in the secret key and the integer pseudorandom sequence using the public key operation algorithm engine, to obtain an expansion signature private key in the expansion private key;
performing a modulo operation on a sum of a second constant in the secret key and the integer pseudorandom sequence using the public key operation algorithm engine, to obtain an expansion encryption private key in the expansion private key.

9. The method of claim 1, wherein processing (S103d) the first pseudonym certificate based on the expansion private key to obtain a first pseudonym certificate private key comprises:

decrypting the first pseudonym certificate using an expansion encryption private key in the expansion private key to obtain a third constant;
performing a modulo operation on the third constant;
determining a sum of a value obtained by performing a modulo operation on the third constant and the expansion signature private key as the first pseudonym certificate private key.

10. A device for processing pseudonym certificate of an on-board apparatus, wherein the device comprises:

a generating module (301) configured to generate a secret key and store the secret key into a security storage unit of the on-board apparatus, wherein the security storage unit is only used to store data corresponding to the pseudonym certificates;

a transmitting module (302) configured to transmit a pseudonym certificate request, which is generated based on the secret key;

a processing module (303) configured to acquire a first pseudonym certificate corresponding to the pseudonym certificate request, and generate a pseudonym certificate private key based on the first pseudonym certificate and the secret key stored in the security storage unit; wherein

the processing module (303) is configured to: determine a time period of the pseudonym certificates and the number of pseudonym certificates within the time period based on the first pseudonym certificate; determine a public key cocoon based on the time period and the number of pseudonym certificates within the time period; determine an expansion private key based on the public key cocoon; and process the first pseudonym certificate based on the expansion private key to obtain a first pseudonym certificate private key, **characterized in that** the public key cocoon is determined directly by the on-board apparatus.

11. A chip (400), wherein the chip (400) comprises a processor (410), a memory (450) and a bus (440);

the memory (450) is configured to store executable instructions;

the processor (410) is configured to communicate with the memory through the bus (440), and implement, when executing the executable instructions stored in the memory (450), the method for processing pseudonym certificate of an on-board apparatus of any one of claims 1-9.

12. A component on an on-board apparatus, wherein the component comprises a chip (400) capable of implementing the method for processing pseudonym certificate of the on-board apparatus of any one of claims 1-9.

13. An on-board apparatus, wherein the on-board apparatus comprises a chip (400) capable of implementing the method for processing pseudonym certificate of the on-board apparatus of any one of claims 1-9.

14. A computer-readable storage medium, wherein the computer-readable storage medium stores executable instructions which, when executed by a processor, implement the method for processing pseudonym certificate of the on-board apparatus of any one of claims 1-9.


**Patentansprüche**

1. Verfahren zum Verarbeiten eines Pseudonymzertifikats einer Bordvorrichtung, wobei das Verfahren auf Grundlage von Fahrzeug-zu-Allem auf die Bordvorrichtung angewendet wird und das Verfahren umfasst:

Generieren (S101) eines Geheimschlüssels und Speichern des Geheimschlüssels in einer sicheren Speichereinheit der Bordvorrichtung, wobei die sichere Speichereinheit nur dazu verwendet wird, Daten zu speichern, die Pseudonymzertifikaten entsprechen;

Übertragen (S102) einer Pseudonymzertifikat-Anforderung, die basierend auf dem Geheimschlüssel generiert wird;

Beziehen eines ersten Pseudonymzertifikats entsprechend der Pseudonymzertifikat-Anforderung und Generieren eines Pseudonymzertifikat-Privatschlüssels basierend auf dem ersten Pseudonymzertifikat und dem Geheimschlüssel, der in der sicheren Speichereinheit gespeichert ist (S103);

wobei das Generieren (S103) des Pseudonymzertifikat-Privatschlüssels basierend auf dem ersten Pseudonymzertifikat und dem Geheimschlüssel, der in der sicheren Speichereinheit gespeichert ist, umfasst:

Bestimmen (S103a) eines Zeitraums der Pseudonymzertifikate und der Anzahl von Pseudonymzertifikaten innerhalb des Zeitraums basierend auf dem ersten Pseudonymzertifikat;

Bestimmen (S103b) einer Kapsel öffentlicher Schlüssel basierend auf dem Zeitraum und der Anzahl von pseudonymen Zertifikaten innerhalb des Zeitraums;

Bestimmen (S103c) eines Erweiterungs-Privatschlüssels basierend auf der Kapsel öffentlicher Schlüssel;

Verarbeiten (S103d) des ersten Pseudonymzertifikats basierend auf dem Erweiterungs-Privatschlüssel, um einen ersten Pseudonymzertifikat-Privatschlüssel zu erlangen, **dadurch gekennzeichnet, dass** die Kapsel öffentlicher Schlüssel direkt von der Bordvorrichtung bestimmt wird.

2. Verfahren nach Anspruch 1, wobei das Bestimmen (S103b) der Kapsel öffentlicher Schlüssel basierend auf dem Zeitraum und der Anzahl von Pseudonymzertifikaten innerhalb des Zeitraums umfasst:

Bestimmen (b1) eines ersten Erweiterungsparameters basierend auf dem Zeitraum und der Anzahl von pseudonymen Zertifikaten innerhalb des Zeitraums;
Bestimmen (b2) eines zweiten Erweiterungsparameters basierend auf dem ersten Erweiterungsparameter;
Bestimmen (b3) einer pseudozufälligen Abfolge von Ganzzahlen in der Kapsel öffentlicher Schlüssel basierend auf dem zweiten Erweiterungsparameter.

3. Verfahren nach Anspruch 2, wobei das Verfahren nach dem Bestimmen (b2) des zweiten Erweiterungsparameters basierend auf dem ersten Erweiterungsparameter ferner umfasst:
Speichern des zweiten Erweiterungsparameters in der sicheren Speichereinheit.

4. Verfahren nach Anspruch 3, wobei das Bestimmen (b3) der pseudozufälligen Abfolge von Ganzzahlen in der Kapsel öffentlicher Schlüssel basierend auf dem zweiten Expansionsparameter umfasst:

Beziehen des zweiten Expansionsparameters von der sicheren Speichereinheit;
Aufrufen einer Algorithmusmaschine für Operationen an öffentlichen Schlüsseln in der Bordvorrichtung und Verarbeiten des zweiten Expansionsparameters unter Verwendung der Algorithmusmaschine für Operationen an öffentlichen Schlüsseln, um die pseudozufällige Abfolge von Ganzzahlen zu erlangen.

5. Verfahren nach Anspruch 2, wobei das Bestimmen (b2) des zweiten Erweiterungsparameters basierend auf dem ersten Erweiterungsparameter umfasst:

basierend auf einem Zählermodus, Verschlüsseln, mehrmals nacheinander, mehrerer Datenabschnitte, die einmal unter Verwendung des Geheimschlüssels erlangt wurden, um den zweiten Erweiterungsparameter zu erlangen;
wobei die mehreren Datenabschnitte umfassen: eine Summe des ersten Erweiterungsparameters und eines ersten numerischen Werts, eine Summe des ersten Erweiterungsparameters und zweier erster numerischer Werte und eine Summe des ersten Erweiterungsparameters und dreier erster numerischer Werte.

6. Verfahren nach einem der Ansprüche 2 bis 5, wobei das Verfahren nach dem Bestimmen (b3) der pseudozufälligen Abfolge von Ganzzahlen in der Kapsel öffentlicher Schlüssel basierend auf dem zweiten Expansionsparameter ferner umfasst:
Beziehen eines zweiten Pseudonymzertifikats.

7. Verfahren nach Anspruch 1, wobei das Bestimmen (S103c) des Erweiterungs-Privatschlüssels basierend auf der Kapsel öffentlicher Schlüssel umfasst:

Beziehen des Geheimschlüssels von der sicheren Speichereinheit (c1);
Aufrufen einer Algorithmusmaschine für Operationen an öffentlichen Schlüsseln in der Bordvorrichtung und Verarbeiten des Geheimschlüssels und einer pseudozufälligen Abfolge von Ganzzahlen in der Kapsel öffentlicher Schlüssel unter Verwendung der Algorithmusmaschine für Operationen an öffentlichen Schlüsseln, um den Erweiterungs-Privatschlüssel (c2) zu erlangen.

8. Verfahren nach Anspruch 7, wobei das Verarbeiten des Geheimschlüssels und der pseudozufälligen Abfolge von Ganzzahlen in der Kapsel öffentlicher Schlüssel unter Verwendung der Algorithmusmaschine für Operationen an öffentlichen Schlüsseln, um den Erweiterungs-Privatschlüssel zu erlangen, umfasst:

Durchführen einer Modulo-Operation an einer Summe einer ersten Konstanten in dem Geheimschlüssel und der pseudozufälligen Abfolge von Ganzzahlen unter Verwendung der Algorithmusmaschine für Operationen an öffentlichen Schlüsseln, um einen Erweiterungssignatur-Privatschlüssel in dem Erweiterungs-Privatschlüssel zu erlangen;
Durchführen einer Modulo-Operation an einer Summe einer zweiten Konstanten in dem Geheimschlüssel und der pseudozufälligen Abfolge von Ganzzahlen unter Verwendung der Algorithmusmaschine für Operationen an öffentlichen Schlüsseln, um einen Erweiterungsverschlüsselungs-Privatschlüssel in dem Erweiterungs-Privatschlüssel zu erlangen.

9. Verfahren nach Anspruch 1, wobei das Verarbeiten (S103d) des ersten Pseudonymzertifikats basierend auf dem Erweiterungs-Privatschlüssel, um den ersten Pseudonymzertifikat-Privatschlüssel zu erlangen, umfasst:

Entschlüsseln des ersten Pseudonymzertifikats unter Verwendung eines Erweiterungsverschlüsselungs-Privatschlüssels in dem Erweiterungs-Privatschlüssel, um eine dritte Konstante zu erlangen;

Durchführen einer Modulo-Operation an der dritten Konstante;

Bestimmen einer Summe eines Wertes, der durch Durchführen einer Modulo-Operation an der dritten Konstante erlangt wurde, und des Erweiterungssignatur-Privatschlüssels als den ersten Pseudonymzertifikat-Privatschlüssel.

10. Einrichtung zum Verarbeiten eines Pseudonymzertifikats einer Bordvorrichtung, wobei die Einrichtung aufweist:

ein Generierungsmodul (301), das dazu eingerichtet ist, einen Geheimschlüssel zu generieren und den Geheimschlüssel in einer sicheren Speichereinheit der Bordvorrichtung zu speichern, wobei die sichere Speichereinheit nur dazu verwendet wird, Daten zu speichern, die den Pseudonymzertifikaten entsprechen;

ein Übertragungsmodul (302), das dazu eingerichtet ist, eine Pseudonymzertifikat-Anforderung zu übertragen, die basierend auf dem Geheimschlüssel generiert wird;

ein Verarbeitungsmodul (303), das dazu eingerichtet ist, ein erstes Pseudonymzertifikat zu beziehen, das der Pseudonymzertifikat-Anforderung entspricht, und einen Pseudonymzertifikat-Privatschlüssel basierend auf dem ersten Pseudonymzertifikat und dem Geheimschlüssel, der in der sicheren Speichereinheit gespeichert ist, zu generieren; wobei

das Verarbeitungsmodul (303) dazu eingerichtet ist: einen Zeitraum der Pseudonymzertifikate und die Anzahl von Pseudonymzertifikaten innerhalb des Zeitraums basierend auf dem ersten Pseudonymzertifikat zu bestimmen; eine Kapsel öffentlicher Schlüssel basierend auf dem Zeitraum und der Anzahl von Pseudonymzertifikaten innerhalb des Zeitraums zu bestimmen; einen Erweiterungs-Privatschlüssel basierend auf der Kapsel öffentlicher Schlüssel zu bestimmen; und das erste Pseudonymzertifikat basierend auf dem Erweiterungs-Privatschlüssel zu verarbeiten, um einen ersten Pseudonymzertifikat-Privatschlüssel zu erlangen, **dadurch gekennzeichnet, dass** die Kapsel öffentlicher Schlüssel direkt von der Bordvorrichtung bestimmt wird.

11. Chip (400), wobei der Chip (400) einen Prozessor (410), einen Speicher (450) und einen Bus (440) aufweist;

der Speicher (450) dazu eingerichtet ist, ausführbare Anweisungen zu speichern;

der Prozessor (410) dazu eingerichtet ist, über den Bus (440) mit dem Speicher zu kommunizieren und beim Ausführen der in dem Speicher (450) gespeicherten ausführbaren Anweisungen das Verfahren zum Verarbeiten eines Pseudonymzertifikats einer Bordvorrichtung nach einem der Ansprüche 1-9 umzusetzen.

12. Komponente auf einer Bordvorrichtung, wobei die Komponente einen Chip (400) aufweist, der in der Lage ist, das Verfahren zum Verarbeiten eines Pseudonymzertifikats einer Bordvorrichtung nach einem der Ansprüche 1-9 umzusetzen.

13. Bordvorrichtung, wobei die Bordvorrichtung einen Chip (400) aufweist, der in der Lage ist, das Verfahren zum Verarbeiten eines Pseudonymzertifikats einer Bordvorrichtung nach einem der Ansprüche 1-9 umzusetzen.

14. Computerlesbares Speichermedium, wobei auf dem computerlesbaren Speichermedium ausführbare Anweisungen gespeichert sind, die bei Ausführung durch einen Prozessor das Verfahren zum Verarbeiten eines Pseudonymzertifikats einer Bordvorrichtung nach einem der Ansprüche 1-9 umsetzen.

**Revendications**

1. Procédé de traitement d'un certificat de pseudonyme d'un appareil embarqué, dans lequel le procédé est appliqué à l'appareil embarqué sur la base des véhicules, le procédé comprenant:

la génération (S101) d'une clé secrète et le stockage de la clé secrète dans une unité de stockage de sécurité de l'appareil embarqué, dans lequel l'unité de stockage de sécurité n'étant utilisée que pour stocker des données correspondant à des certificats de pseudonyme;

la transmission (S102) d'une demande de certificat de pseudonyme, qui est générée sur la base de la clé secrète;

l'acquisition d'un premier certificat de pseudonyme correspondant à la demande de certificat de pseudonyme, et la génération d'une clé privée de certificat de pseudonyme sur la base du premier certificat de pseudonyme et de la clé secrète stockée dans l'unité de stockage de sécurité (S103);

dans lequel la génération (S103) d'une clé privée de certificat de pseudonyme sur la base du premier certificat de pseudonyme et de la clé secrète stockée dans l'unité de stockage de sécurité comprend:

> la détermination (S103a) d'une période de temps des certificats de pseudonyme et le nombre de certificats de pseudonyme dans la période de temps sur la base du premier certificat de pseudonyme;
> la détermination (S103b) d'un cocoon de clé publique sur la base de la période de temps et du nombre de certificats de pseudonyme dans la période de temps;
> la détermination (S103c) d'une clé privée d'expansion sur la base du cocoon de clé publique;
> le traitement (S103d) du premier certificat de pseudonyme sur la base de la clé privée d'expansion pour obtenir une première clé privée de certificat de pseudonyme, **caractérisé en ce que** le cocon de clé publique est déterminé directement par l'appareil embarqué.

2. Procédé selon la revendication 1, dans lequel la détermination (S103b) d'un cocoon de clé publique sur la base de la période de temps et du nombre de certificats de pseudonyme dans la période de temps comprend:

> la détermination (b1) d'un premier paramètre d'expansion sur la base de la période de temps et du nombre de certificats de pseudonyme dans de la période de temps;
> la détermination (b2) d'un deuxième paramètre d'expansion sur la base du premier paramètre d'expansion;
> la détermination (b3) d'une séquence pseudo-aléatoire entière dans le cocoon de clé publique sur la base du deuxième paramètre d'expansion.

3. Procédé selon la revendication 2, dans lequel, après la détermination (b2) du deuxième paramètre d'expansion sur la base du premier paramètre d'expansion, le procédé comprend en outre:
le stockage du deuxième paramètre d'expansion dans l'unité de stockage de sécurité.

4. Procédé selon la revendication 3, dans lequel la détermination (b3) d'une séquence pseudo-aléatoire entière dans le cocoon de clé publique sur la base du deuxième paramètre d'expansion comprend:

> l'acquisition du deuxième paramètre d'expansion à partir de l'unité de stockage de sécurité;
> le recours à un moteur d'algorithme d'opération de clé publique dans l'appareil embarqué et le traitement du deuxième paramètre d'expansion en utilisant le moteur d'algorithme d'opération de clé publique pour obtenir la séquence pseudo-aléatoire entière.

5. Procédé selon la revendication 2, dans lequel la détermination (b2) d'un deuxième paramètre d'expansion sur la base du premier paramètre d'expansion comprend:

> sur la base d'un mode compteur, chiffrer, plusieurs fois de suite, des éléments de données multiples obtenus une fois en utilisant la clé secrète pour obtenir le deuxième paramètre d'expansion;
> dans lequel les éléments de données multiples comprennent: une somme du premier paramètre d'expansion et d'une première valeur numérique, une somme du premier paramètre d'expansion et de deux premières valeurs numériques, et une somme du premier paramètre d'expansion et de trois premières valeurs numériques.

6. Procédé selon l'une quelconque des revendications 2 à 5, dans lequel, après la détermination (b3) de la séquence pseudo-aléatoire entière dans le cocoon de clé publique sur la base du deuxième paramètre d'expansion, le procédé comprend en outre:
l'acquisition d'un deuxième certificat de pseudonyme.

7. Procédé selon la revendication 1, dans lequel la détermination (S103c) d'une clé privée d'expansion sur la base du cocon de clé publique comprend:

> l'acquisition de la clé secrète à partir de l'unité de stockage de sécurité (c1);
> le recours à moteur d'algorithme d'opération de clé publique dans l'appareil embarqué, et le traitement de la clé secrète et d'une séquence pseudo-aléatoire entière dans le cocoon de clé publique en utilisant le moteur d'algorithme d'opération de clé publique pour obtenir la clé privée d'expansion (c2).

8. Procédé selon la revendication 7, dans lequel le traitement de la clé secrète et d'une séquence pseudo-aléatoire entière dans le cocoon de clé publique en utilisant le moteur d'algorithme d'opération de clé publique pour obtenir la clé privée d'expansion comprend:

l'exécution d'une opération modulo sur une somme d'une première constante dans la clé secrète et de la séquence pseudo-aléatoire entière en utilisant le moteur d'algorithme d'opération de clé publique, pour obtenir une clé privée de signature d'expansion dans la clé privée d'expansion;

l'exécution d'une opération modulo sur une somme d'une deuxième constante dans la clé secrète et de la séquence pseudo-aléatoire entière en utilisant le moteur d'algorithme d'opération de clé publique, pour obtenir une clé privée de chiffrement d'expansion dans la clé privée d'expansion.

9. Procédé selon la revendication 1, dans lequel le traitement (S103d) du premier certificat de pseudonyme sur la base de la clé privée d'expansion pour obtenir une première clé privée de certificat de pseudonyme comprend:

le décryptage du premier certificat de pseudonyme en utilisant une clé privée de chiffrement d'expansion dans la clé privée d'expansion pour obtenir une troisième constante;

l'exécution d'une opération modulo sur la troisième constante;

le détermination d'une somme d'une valeur obtenue en exécutant une opération modulo sur la troisième constante et la clé privée de signature d'expansion comme première clé privée de certificat de pseudonyme.

10. Dispositif de traitement du certificat de pseudonyme d'un appareil embarqué, dans lequel le dispositif comprend:

un module de génération (301) conçu pour générer une clé secrète et stocker la clé secrète dans une unité de stockage de sécurité de l'appareil embarqué, dans lequel l'unité de stockage de sécurité n'est utilisée que pour stocker des données correspondant aux certificats de pseudonyme;

un module de transmission (302) conçu pour transmettre une demande de certificat de pseudonyme, qui est générée sur la base de la clé secrète;

un module de traitement (303) conçu pour acquérir un premier certificat de pseudonyme correspondant à la demande de certificat de pseudonyme, et générer une clé privée de certificat de pseudonyme sur la base du premier certificat de pseudonyme et la clé secrète stockée dans l'unité de stockage de sécurité; dans lequel le module de traitement (303) est conçu pour: déterminer une période de temps des certificats de pseudonyme et le nombre de certificats de pseudonyme dans la période de temps sur la base du premier certificat de pseudonyme; déterminer un cocoon de clé publique sur la base de la période de temps et du nombre de certificats de pseudonyme dans la période de temps; déterminer une clé privée d'expansion sur la base du cocoon de clé publique; et traiter le premier certificat de pseudonyme sur la base de la clé privée d'expansion pour obtenir une première clé privée de certificat de pseudonyme, **caractérisé en ce que** le cocoon de clé publique est déterminé directement par l'appareil embarqué.

11. Puce (400), dans laquelle la puce (400) comprend un processeur (410), une mémoire (450) et un bus (440);

la mémoire (450) est conçue pour stocker des instructions exécutables;

le processeur (410) est conçu pour communiquer avec la mémoire par l'intermédiaire du bus (440) et mettre en œuvre, lors de l'exécution des instructions exécutables stockées dans la mémoire (450), le procédé de traitement du certificat de pseudonyme d'un appareil embarqué selon l'une quelconque des revendications 1 à 9.

12. Composant d'un appareil embarqué, dans lequel le composant comprend une puce (400) capable de mettre en œuvre le procédé de traitement du certificat de pseudonyme de l'appareil embarqué selon l'une quelconque des revendications 1 à 9.

13. Appareil embarqué, dans lequel l'appareil embarqué comprend une puce (400) capable de mettre en œuvre le procédé de traitement du certificat de pseudonyme de l'appareil embarqué selon l'une quelconque des revendications 1 à 9.

14. Support de stockage lisible par ordinateur, dans lequel le support de stockage lisible par ordinateur stocke des instructions exécutables qui, lorsqu'elles sont exécutées par un processeur, mettent en œuvre le procédé de traitement du certificat de pseudonyme de l'appareil embarqué selon l'une quelconque des revendications 1 à 9.

Generating a secret key, and storing the secret key into a security storage unit of the on-board apparatus, wherein the security storage unit is only used to store data corresponding to the pseudonym certificates. — S101

Transmitting a pseudonym certificate request generated based on the private key. — S102

Acquiring a first pseudonym certificate corresponding to the pseudonym certificate request, and generating a pseudonym certificate private key based on the first pseudonym certificate and the secret key stored in the security storage unit. — S103

FIG. 1

Determining a time period of the pseudonym certificates and the number of pseudonym certificates within the time period based on the first pseudonym certificate. — S103a

Determining a public key cocoon based on the time period and the number of pseudonymous certificates within the time period. — S103b

Determining an expansion private key based on the public key cocoon. — S103c

Processing the first pseudonym certificate based on the expansion private key to obtain a first pseudonym certificate private key. — S103d

FIG. 2

Determining a first expansion parameter based on the time period and the number of pseudonymous certificates within the time period. — b1

Determining a second expansion parameter based on the first expansion parameter. — b2

Determining an integer pseudorandom sequence in the public key cocoon based on the second expansion parameter. — b3

FIG. 3

Acquiring a secret key from the security storage unit. — c1

Invoking a public key operation algorithm engine in the on-board apparatus, processing the secret key and the integer pseudorandom sequence in the public key cocoon using the public key operation algorithm engine to obtain an expansion private key. — c2

FIG. 4

The on-board apparatus generating a secret key, and storing the secret key into a security storage unit of the on-board apparatus, wherein the security storage unit is only used for storing data corresponding to the pseudonym certificate.　　S201

↓

The on-board apparatus transmitting a pseudonym certificate request generated based on the secret key to the PRA.　　S202

↓

The on-board apparatus acquiring a first pseudonym certificate corresponding to the pseudonym certificate request, determining a time period of the pseudonym certificates and the number of the pseudonym certificates within the time period based on the first pseudonym certificate, and determining the public key cocoon based on the time period and the number of pseudonym certificates within the t ime period.　　S203

↓

The on-board apparatus acquiring a second pseudonym certificate.　　S204

↓

Determining an expansion private key based on the public key cocoon.　　S205

↓

The on-board apparatus processing the first pseudonym certificate based on the expansion private key, to obtain the first pseudonym certificate private key.　　S206

FIG. 5

FIG. 6

FIG.7

Generating Module 301

Transmitting Module 302

Processing Module 303

FIG. 8

Chip 400

Memory 450

Operating System 451

Network
Interface 420

Network Communication Module 452

Processor 410

Device for processing pseudonym
certificate of on-board apparatus

Generating Module 301

Transmitting Module 302

440

Processing Module 303

User Interface 430

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190245703 A1

**Non-patent literature cited in the description**

- **MARCOS A. SIMPLICIO et al.** *ACPC: Efficient revocation of pseudonym certificates using activation codes*